# EUROPEAN PATENT SPECIFICATION

(11) **EP 1 728 718 B1**
(45) Date of publication and mention of the grant of the patent: **26.05.2010**
(21) Application number: 05015232.1
(22) Date of filing: 13.07.2005
(51) Int. Cl.: B65B 5/10, B65B 39/00

(54) **Apparatus for detecting dropping tablets in automatic medicine packaging machine**
Vorrichtung zur Erfassung von herunterfallenden Tabletten in einer automatischen Arzneimittelverpackungsmaschine
Dispositif pour détecter des comprimés tombants dans une machine d'emballage médicale automatique

(30) Priority: 01.06.2005 KR 2005046869
(43) Date of publication of application: 06.12.2006
(73) Proprietor: JVM Co., Ltd., Daegu 704-170 (KR)
(72) Inventor: Kim, Jun-jo 109-1602 Yongsan Lotte Castle Grand, Daegu 704-923 (KR)
(74) Representative: Grünecker, Kinkeldey, Stockmair & Schwanhäusser Anwaltssozietät

(56) References cited:
- EP-A- 1 053 738
- WO-A-01/94205
- US-A- 5 481 855
- US-A1- 2004 034 447

## Description

### BACKGROUND OF THE INVENTION

### Field of the Invention

The present invention relates to an automatic medicine packaging machine, and particularly, to an apparatus for precisely detecting that a tablet is dropped in a last hopper so that packaging speed of tablets is increased and operation of a shutter and a sealer is precisely performed.

### Description of the Related Art

Generally, an automatic medicine packaging machine indicates an apparatus for automatically packaging medicines into doses.

An apparatus for detecting a dropping tablet in an automatic medicine packing machine according to the preamble of claim 1 is known from US 5,481,855 A. In this apparatus, medical tablets are contained in feeders. When a tablet is ejected from a feeder, the tablet falls into a hole in a pocket plate. This hole can be aligned with a hole in a rotating shutter plate. A switch sensor controls alignment of the holes in order to ensure that a tablet can pass the shutter plate and fall into a hopper. However, this apparatus can merely control whether the path for a dropping tablet is free from obstacles.

Other embodiments of automatic medicine packing machines are disclosed in EP 1 053 738 A2 and WO 01/94205 A1.

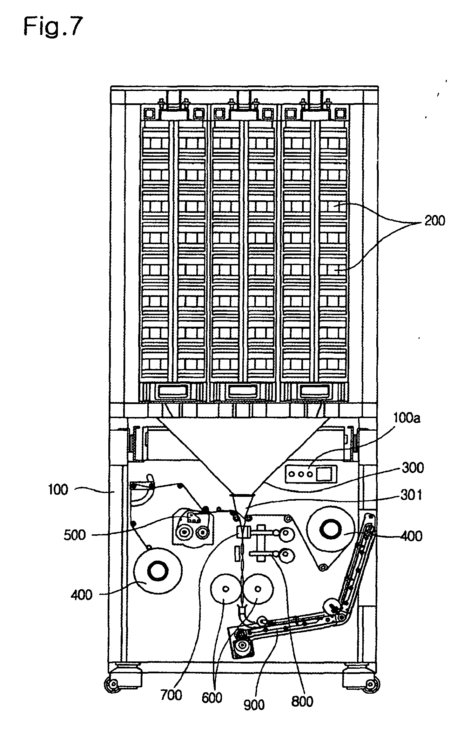

The structure and operation of a conventional automatic medicine packaging machine will be described with reference to Fig. 7 schematically depicting the conventional automatic medicine packaging machine.

As shown in Fig. 7, the conventional automatic medicine packaging machine includes a plurality of tablet cassettes 200 installed on a shelf disposed at the upper side of a main body 100, a hopper 300 having a last hopper 301 installed at the lower side of the tablet cassettes 200, a pair of packaging sheet rolls 400 disposed at the lower lateral sides of the hopper 300, a printer 500 installed at the lower side of one of the packaging rolls 400 to print information such as the patient name, how to take the medicine, or the like, a pair of driving rollers 600 installed below the hopper 300, a sealer 700 disposed between the hopper 300 and the driving rollers 600 to seal the packaging sheets to form a series of medicine packets R, and a punch 800 disposed below the sealer 700 to form holes in the series of medicine packets R.

In such the conventional automatic medicine packaging machine, the tablets, dropped into the hopper 300 from the tablet cassettes 200, are inserted between a pair of packaging sheets drawn from the packaging rolls 400 by the driving rollers 600, and the sealer 700 seals the packaging sheets traveling downward to finish a series of medicine packets R and to discharge the series of medicine packets R through the lower side of the main body 100.

The discharged series of medicine packets R is fed from the lower side of the main body 100 to the lateral side of the main body 100 by a feeder 900 and discharged out through the lateral side of the main body 100.

The automatic medicine packaging machine and its devices are controlled by a controller 100a.

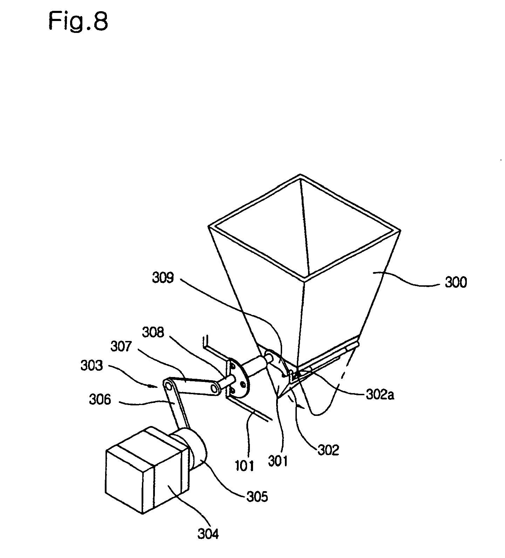

Fig. 8 is an enlarged rear perspective view illustrating the conventional automatic medicine packaging machine.

As shown in the drawing, the conventional automatic medicine packaging machine includes the last hopper 301 disposed at the lower side of the hopper 300 installed at a main frame 101 of the main body 100, a shutter 302 installed in the last hopper 30, and a shutter driving part 303 for driving the shutter 302 to open and close the last hopper 301.

The shutter driving part 303 includes a rotation cam 305 rotated by a motor 304, a rotation link 306 connected to the rotation cam 305, a connection link 307 connected to the rotation link 306, a rotation shaft 308 coupled with a connection link 307 and penetrating the main frame 101 to rotate, and a trigger 309 installed to the end of the rotation shaft 308 and rotated by the rotation shaft 308.

The trigger 309 rotates to press a crank bar 302a installed to the upper outer side of the shutter 302 so that the shutter 302 is opened and the tablets accommodated in the last hopper 301 are discharged through the lower side thereof.

However, the conventional automatic medicine packaging machine has the following disadvantages.

Since the time that the medicine tablets are discharged from the respective tablet cassettes and are dropped in the last hopper is not uniform, a delay time is set to the shutter opening time and the sealing time of the sealer. Due to the preset delay time, the packaging speed of the medicine tablets is significantly slowed and setting of the delay time is very difficult and unreliable.

Due to the unreliable delay time, the shutter and the sealer cannot be precisely driven so that various errors occur during the packaging of the medical tablets.

### SUMMARY OF THE INVENTION

Therefore, the present invention has been made in view of the above and/or other problems, and it is an object of the present invention to provide a dropping tablet detecting apparatus of an automatic medicine packaging machine for precisely detecting whether a tablet is dropped in a last hopper or not such that the packaging speed of the tablet is increased and a shutter and a sealer are precisely driven.

It is a further object of the present invention to provide a dropping tablet detecting apparatus of an automatic medicine packaging machine for precisely detecting a dropping tablet with a simple structure.

It is another object of the present invention to provide a dropping tablet detecting apparatus of an automatic medicine packaging machine in which a shutter is stably driven by a simple structure.

In accordance with the present invention, the above and other objects can be accomplished by the provision of an apparatus for detecting a dropping tablet in an automatic medicine packaging machine including a last hopper provided at the lower end of a hopper installed in a main frame, a shutter installed in the last hopper, and a shutter driving part for driving the shutter to open and close the last hopper such that a tablet, passing through the hopper from a tablet cassette and discharged into the last hopper, is inserted into packaging sheets by the shutter driving part and continuously packaged by a sealer under the control of a controller, the apparatus for detecting a dropping tablet including a dropping tablet detector installed in the last hopper to detect when the tablet is dropped into the last hopper and to input the detected information about the dropping tablet to the controller such that the moment when the shutter is opened is optimized.

Preferably, the dropping tablet detector includes a front through-hole and a rear through-hole, respectively penetrating the front side and the rear side of the last hopper, and an optical sensor installed to correspond to the front through-hole 11 and the rear through-hole to emit light to the tablet dropped down in the last hopper so as to detect the dropping tablet.

The optical sensor includes a plurality of light emitters arranged in the front through-hole in the horizontal direction to emit light to the inside of the last hopper, and the same number of light receivers as the number of light emitters arranged to correspond to the light emitters in the rear through-hole to detect the tablet dropping into the last hopper when the dropping tablet blocks the light emitted from the light emitters.

The shutter driving part includes a rotation pin rotatably installed to the upper side of the last hopper, coupled with the upper side of the shutter, and having a torsion spring, a trigger obliquely installed to the end of the rotation pin, an actuator for pressing the end of the trigger to rotate the rotation pin, and a motor mounted to the rear side of the main frame by a bracket to drive the actuator.

The actuator includes a rotation disc mounted to a spindle of the motor, a revolving pin eccentrically installed to the rotation disc and penetrating a through-hole formed in the main frame, and a pushing roller rotatably installed to the end of the angular moving pin to contact the trigger.

Moreover, the apparatus for detecting a dropping tablet in an automatic medicine packaging machine further includes a stopper pin installed in the bracket for fixing the motor and contacting the revolving pin to stop the revolution of the revolving pin to restrict the revolution of the revolving pin.

Preferably, the apparatus for detecting a dropping tablet in an automatic medicine packaging machine further includes a magnet installed to the outer circumference of the rotation disc, and a magnetic sensor for detecting the rotating angle of the rotation disc using magnetic field of the magnet.

### BRIEF DESCRIPTION OF THE DRAWINGS

These and/or other objects and advantages of the present invention will become apparent and more readily appreciated from the following description of the embodiments, taken in conjunction with the accompanying drawings, in which:
Fig. 1 is a schematic front sectional view illustrating an automatic medicine packaging machine employing an apparatus for detecting a dropping tablet according to a preferred embodiment of the present invention;
Fig. 2 is an enlarged exploded perspective view of main parts of the apparatus for detecting a dropping tablet according to a preferred embodiment of the present invention;
Fig. 3 is a perspective view of an assembly of the apparatus for detecting a dropping tablet in Fig. 2;
Fig. 4 is a plane sectional view of the main parts of the apparatus for detecting a dropping tablet according to a preferred embodiment of the present invention;
Fig. 5 is a front sectional view of main parts illustrating the operation of the apparatus for detecting a dropping tablet according to a preferred embodiment of the present invention;
Fig. 6 is a side sectional view of the main parts illustrating the operation of the apparatus for detecting a dropping tablet according to a preferred embodiment of the present invention;
Fig. 7 is a front sectional view illustrating a conventional automatic medicine packaging machine; and
Fig. 8 is an enlarged rear side perspective view illustrating the conventional automatic medicine packaging machine.

### DESCRIPTION OF THE PREFERRED EMBODIMENTS

Hereinafter, an apparatus for detecting a dropping tablet in an automatic medicine packaging machine according to the preferred embodiment of the present invention will be described in detail with reference to the accompanying drawings.

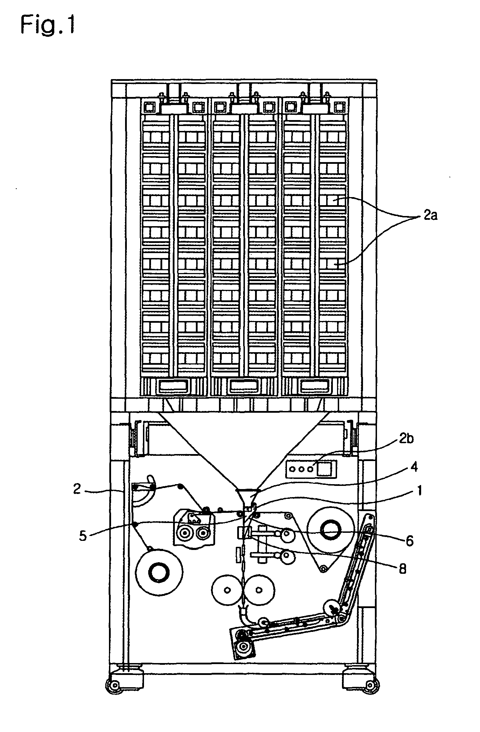

Fig. 1 is a schematic front sectional view illustrating an automatic medicine packaging machine employing an apparatus for detecting a dropping tablet according to a preferred embodiment of the present invention.

As shown in the drawings, the apparatus for detecting a dropping tablet in an automatic medicine packaging machine according to the first preferred embodiment of the present invention includes a dropping tablet detector 1 installed in a last hopper 5 disposed at the lower side of a hopper 4 of a main body 4 to detect when the tablet is dropped into the last hopper 5 and to input the detected information about the dropping tablet to a controller 2b such that the moment when the shutter 6 is opened is optimized.

The dropping tablet detector 1 detects a tablet dropping into the last hopper 5 after being dropped into the hopper 4 of the main body 2 from a tablet cassette 2a and inputs the detected information to the controller 2b such that the controller 2b, having received the detected information, controls a shutter 6 and a sealer 8 to be rapidly operated, thereby increasing the packaging speed of the tablet without setting of the delay time of the shutter 6 and the sealer 8.

In other words, the dropping tablet detector 1 detects the tablet dropping into the last hopper 5 such that the controller 2b precisely controls operations of the shutter 6 and the sealer 8.

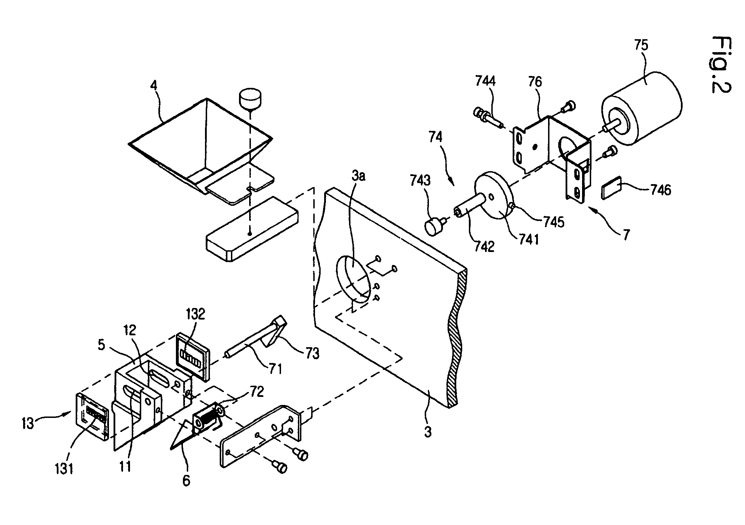

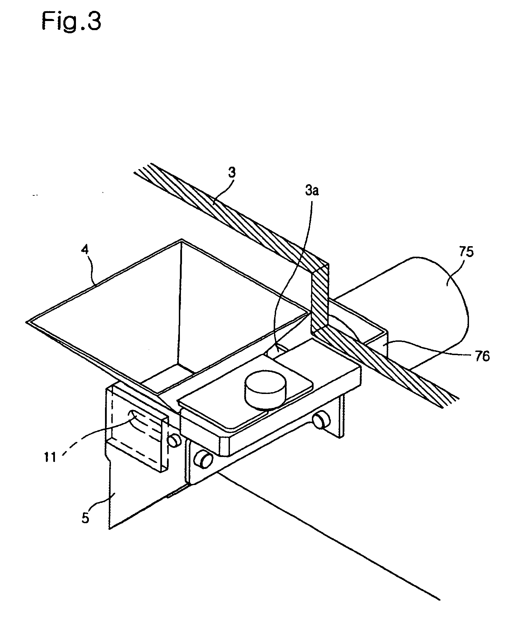

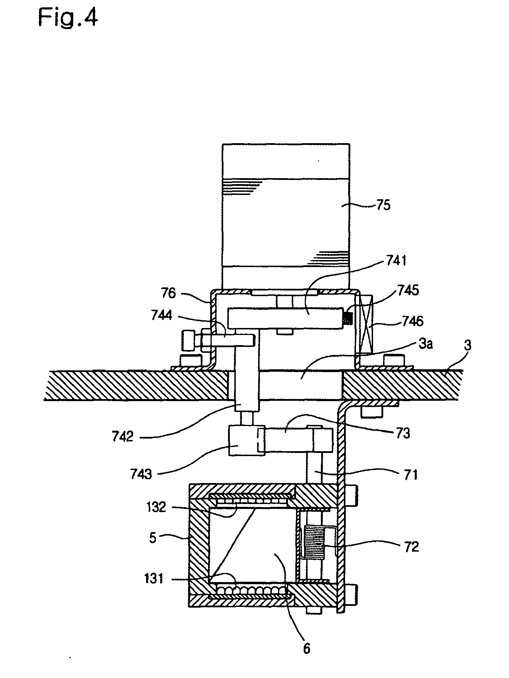

Fig. 2 is an enlarged exploded perspective view of main parts of the apparatus for detecting a dropping tablet according to a preferred embodiment of the present invention, Fig. 3 is a perspective view of an assembly of the apparatus for detecting a dropping tablet in Fig. 2, and Fig. 4 is a plane sectional view of the main parts of the apparatus for detecting a dropping tablet according to a preferred embodiment of the present invention.

As shown in the drawings, the dropping tablet detector 1 includes a front through-hole 11 and a rear through-hole 12, respectively penetrating the front side and the rear side of the last hopper 5, and an optical sensor 13 installed to correspond to the front through-hole 11 and the rear through-hole 12 to emit light to the tablet dropped down in the last hopper 5 so as to detect the dropping tablet.

The optical sensor 13 includes a plurality of light emitters 131 arranged in the front through-hole 11 in the horizontal direction to emit light to the inside of the last hopper 5, and the same number of light receivers 132 as the number of light emitters 131 arranged to correspond to the light emitters 131 in the rear through-hole 12 to detect the tablet dropping into the last hopper 5 when the dropping tablet blocks the light emitted from the light emitters 131.

The light emitters 131 and the light receivers 132 of the optical sensor 13 are arranged in the front and rear sides of the last hopper 5 to emit light through the inside of the last hopper 5 and to receive the emitted light through the front and rear through-holes 11 and 12.

The optical sensor 13 detects whether the tablet is dropped or not when the emitted light is intercepted or not such that plural light emitters 131 horizontally arranged in the front through-hole 11 formed in the last hopper 5 emit a plurality of light beams toward the same number of light receivers 132 as the number of the light emitters 131 horizontally arranged in the rear through-hole 12 and the light receivers 132 receive the emitted light beams so that the optical sensor 5 detects that the tablet does not pass through the last hopper 5.

In addition, since, when the light beams emitted from the light emitters 131 are not received by the light receivers 132 and are intercepted instantly, the tablet is dropped into the last hopper 5 and intercepts the emitted light beams, the optical sensor 13 detects that the tablet is dropped into the last hopper 5 and is positioned on the shutter 6.

Moreover, the shutter 6 disposed at the lower side of the last hopper 5 is driven by the shutter driving part 7 to open and close the lower side of the last hopper 5 so as to discharge the tablet dropped into the last hopper 5 through the lower side.

As such, the shutter driving part 7 for opening and closing the shutter 6 includes a rotation pin 71 rotatably installed to the upper side of the last hopper 5, coupled with the upper side of the shutter 6, and having a torsion spring 72, a trigger 73 obliquely installed to the end of the rotation pin 71, an actuator 74 for pressing the end of the trigger 73 to rotate the rotation pin 71, and a motor 75 mounted to the rear side of the main frame 3 by a bracket 76 to drive the actuator 74.

The actuator 74 includes a rotation disc 741 mounted to a spindle of the motor 75, a revolving pin 742 eccentrically installed to the rotation disc 741 and penetrating a through-hole 3a formed in the main frame 3, and a pushing roller 743 rotatably installed to the end of the angular moving pin 742 to contact the trigger 73.

In the shutter driving part 7, when the rotation disc 741 is rotated at an angle by the motor 75 to revolve the revolving pin 742, the pushing roller 743 revolves to press the trigger 73 at an angle so that the rotation pin 71 coupled with the trigger 73 is rotated, whereby the shutter 6 coupled with the rotation pin 71 is rotated, the lower side of the last hopper 5 closed by the shutter 6 is opened, and the tablet accommodated in the last hopper 5 is discharged through the lower side of the hopper 5.

When the motor 75 is rotated in the reverse direction to the initial position after opening of the last hopper due to the rotation of the shutter 6, the revolving pin 742 is revolved in the reverse direction and the pushing roller 743 pressing the trigger 73 is returned to its initial position. Due to these movements, the torsion spring 72 elastically pressing the rotation pin 71 is returned to its initial position to restore the rotation pin 71 so that the shutter 6 is rotated to its initial position to close the lower side of the last hopper 5.

Moreover, a stopper pin 744 is installed in the bracket 76 for fixing the motor 75 and contacts the revolving pin 742. The stopper pin 744 stops the revolution of the revolving pin 742 to restrict the revolution of the revolving pin 742.

In addition, a magnet 745 is installed to the outer circumference of the rotation disc 741, and a magnetic sensor 746 for detecting the rotating angle of the rotation disc 741 using the magnetic field of the magnet 745. The magnetic sensor 746 detects the rotation angle of the rotation disc 741 and inputs the detected rotation angle to the controller 2b so that the motor 75 is controlled by the controller 2b and the opening and closing of the last hopper 5 are precisely performed by the shutter 6.

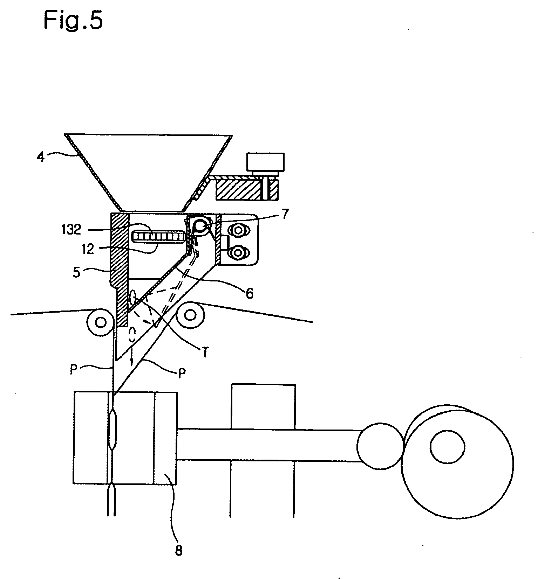

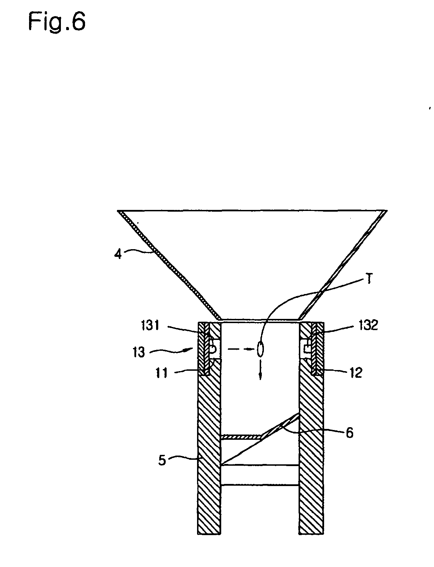

Fig. 5 is a front sectional view of main parts illustrating the operation of the apparatus for detecting a dropping tablet according to a preferred embodiment of the present invention, and Fig. 6 is a side sectional view of the main parts illustrating the operation of the apparatus for detecting a dropping tablet according to a preferred embodiment of the present invention.

As shown in the drawings, the tablet T dropped into the last hopper 5 from the hopper 4 passes through the inside of the last hopper 5, is dropped down, and is positioned on the shutter 6 closing the lower side of the last hopper 5.

As such, the optical sensor 13 detects the tablet T dropping through the last hopper 5 and inputs the detected information to the controller 2b. The detection is performed when light beams emitted from the light emitters 131 installed in the front through-hole 11 of the last hopper 5 to the light receivers 132 installed in the rear through-hole 12 are intercepted by the tablet T, and particularly, is accurately and precisely performed even when the tablet T is continuously packaged one by one.

Moreover, the controller 2b, having received the detected information about the dropping tablet T from the optical sensor 13, drives the shutter driving part 7 to rotate the shutter 6 so that the lower end of the last hopper 5 is opened and the tablet T accommodated in the last hopper 5 is discharged through the lower side thereof, whereby the tablet T is inserted between the packaging sheets P of the sealer 8.

When the tablet T is inserted into the sealer 8, the controller 2b controls the sealer 8 to seal the packaging sheets P so as to package the tablet T.

Thus, the moment when the tablet T is dropped into the last hopper 5, is detected by the optical sensor 13 so that the controller 2b precisely controls the shutter 6 and the sealer 8.

As described above, according to the apparatus for detecting dropping tablets in an automatic medicine packaging machine, the tablets dropping into the last hopper are precisely detected to precisely drive the shutter and the sealer so that packaging speed of tablets is increased, the tablets are stably and accurately packaged, operation of the shutter and the sealer is precisely performed, and the setting or adjustment of the delay time for the shutter and the sealer is unnecessary or remarkably convenient.

Since the apparatus for detecting dropping tablets in an automatic medicine packaging machine has a simple structure for precisely detecting the dropping tablets, its manufacturing and installation are convenient. Moreover, since uncertainty whether the tablet is dropped or not is removed, particularly, the tablets are effectively and accurately packaged when the tablets are packaged one by one.

In addition, since the apparatus for detecting dropping tablets in an automatic medicine packaging machine has a simple structure for stably driving the shutter, its manufacturing and installation are convenient, and stability of the shutter is significantly enhanced.

Although the preferred embodiments of the present invention have been disclosed for illustrative purposes, those skilled in the art will appreciate that various modifications, additions and substitutions are possible, without departing from the scope of the invention as disclosed in the accompanying claims.

## Claims

1. An automatic medicine packaging machine comprising a last hopper (5) provided at the lower end of a hopper (4) installed in a main frame (3), a shutter (6) installed in the last hopper (5), and a shutter driving part (7) for driving the shutter (6) to open and close the last hopper (5) such that a tablet (T), passing through the hopper (4) from a tablet cassette (2a) and discharged into the last hopper (5), is inserted into packaging sheets (P) by the shutter driving part (7) and continuously packaged by a sealer (8) under the control of a controller (2b),
the automatic medicine packaging machine further comprising an apparatus for detecting a dropping tablet (T),
**characterized by** the apparatus for detecting a dropping tablet (T) comprising a dropping tablet detector (1) installed in the last hopper (5) to detect when the tablet (T) is dropped into the last hopper (5) and to input the detected information about the dropping tablet (T) to the controller (2b), the controller (2b) being adapted to control the moment when the shutter (6) is opened based on the detected information about the moment when the tablet (T) is dropped into the last hopper (5).

2. The automatic medicine packaging machine as set forth in claim 1, wherein the dropping tablet detector (1) comprises:
a front through-hole (11) and a rear through-hole (12), respectively penetrating the front side and the rear side of the last hopper (5); and
an optical sensor (13) installed to correspond to the front through-hole (11) and the rear through-hole (12) to emit light to the tablet (T) dropped down in the last hopper (5) so as to detect the dropping tablet.

3. The automatic medicine packaging machine as set forth in claim 2, wherein the optical sensor (13) comprises:
a plurality of light emitters (131) arranged in the front through-hole (11) in the horizontal direction to emit light to the inside of the last hopper (5); and
the same number of light receivers (132) as the number of light emitters (131) arranged to correspond to the light emitters in the rear through-hole (12) to detect the tablet (T) dropping into the last hopper (5) when the dropping tablet blocks the light emitted from the light emitters (131).

4. The automatic medicine packaging machine as set forth in claim 1, wherein the shutter driving part (7) comprises:
a rotation pin (71) rotatably installed to the upper side of the last hopper (5), coupled with the upper side of the shutter (6), and having a torsion spring (72);
a trigger (73) obliquely installed to the end of the rotation pin (71);
an actuator (74) for pressing the end of the trigger (73) to rotate the rotation pin (71); and
a motor (75) mounted to the rear side of the main frame (3) by a bracket (76) to drive the actuator (74).

5. The automatic medicine packaging machine as set forth in claim 4, wherein the actuator (74) comprises:
a rotation disc (741) mounted to a spindle of the motor (75);
a revolving pin (742) eccentrically installed to the rotation disc (741) and penetrating a through-hole (3a) formed in the main frame (3); and
a pushing roller (743) rotatably installed to the end of the revolving pin (743) to contact the trigger (73).

6. The automatic medicine packaging machine as set forth in claim 5, further comprising:
a stopper pin (744) installed in the bracket (76) for fixing the motor (75) and contacting the revolving pin (742) to stop the revolution of the revolving pin (742) to restrict the revolution of the revolving pin (742).

7. The automatic medicine packaging machine as set forth in any one of claims 5 or 6, further comprising:
a magnet (745) installed to the outer circumference of the rotation disc (741); and
a magnetic sensor (746) for detecting the rotating angle of the rotation disc (741) using magnetic field of the magnet (745).

## Patentansprüche

1. Automatische Arzneimittelverpackungsmaschine, umfassend einen letzten Füllschacht (5), der am unteren Ende eines in einem Hauptrahmen (3) installierten Füllschachts (4) vorgesehen ist, einen in dem letzten Füllschacht (5) installierten Verschluss (6), und einen Verschluss-Antriebsteil (7) zum Antreiben des Verschlusses (6) zum Öffnen und Schließen des letzten Füllschachts (5), sodass eine ausgehend von einer Tabletten-Kassette (2a) den Füllschacht (4) durchquerende und in den letzten Füllschacht (5) gelangende Tablette (T) mittels des Verschluss-Antriebsteils (7) in Verpackungsfolien (P) gelangt und unter der Kontrolle einer Steuerung (2b) kontinuierlich mittels eines Versieglers (8) verpackt wird,
wobei die automatische Arzneimittelverpackungsmaschine ferner eine Vorrichtung zum Erfassen einer herunterfallenden Tablette (T) umfasst,
**dadurch gekennzeichnet,**
**dass** die Vorrichtung zum Erfassen einer herunterfallenden Tablette (T) einen in dem letzten Füllschacht (5) installierten Detektor (1) für herunterfallende Tabletten aufweist zum Detektieren, wann die Tablette (T) in den letzten Füllschacht (5) gefallen ist, und zum Eingeben der ermittelten Informationen über die herunterfallende Tablette (T) an die Steuerung (2b), wobei die Steuerung (2b) dazu konfiguriert ist, den Zeitpunkt, zu dem der Verschluss (6) geöffnet wird, in Abhängigkeit von der ermittelten Information über den Zeitpunkt, an dem die Tablette (T) in den letzten Füllschacht (5) hineingefallen ist, zu steuern.

2. Automatische Arzneimittelverpackungsmaschine gemäß Anspruch 1, wobei der Detektor (1) für die herunterfallende Tablette aufweist:
ein vorderes Durchgangsloch (11) und ein rückwärtiges Durchgangsloch (12), die jeweils die Vorderseite und die Rückseite des letzten Füllschachts (5) durchdringen; und
einen optischen Sensor (13), der in Übereinstimmung mit dem vorderen Durchgangsloch (11) und dem rückwärtigen Durchgangsloch (12) installiert ist, um Licht auf die in den letzten Füllschacht (5) herunterfallende Tablette (T) auszusenden, so dass die herunterfallende Tablette detektiert wird.

3. Automatische Arzneimittelverpackungsmaschine gemäß Anspruch 2, wobei der optische Sensor (13) umfasst:
eine Vielzahl von Licht-Emittern (131), die in horizontaler Richtung in dem vorderen Durchgangsloch (11) angeordnet sind, um Licht zur Innenseite des letzten Füllschachts (5) auszusenden;
die gleiche Anzahl von Lichtempfängern (132) wie die Anzahl von Licht-Emittern (131), wobei die Licht-Empfänger in Übereinstimmung mit den Licht-Emittern im rückwärtigen Durchgangsloch (12) angeordnet sind, um die in den letzten Füllschacht (5) herunterfallende Tablette (T) zu detektieren, wenn die herunterfallende Tablette das von den Licht-Emittern (131) ausgesandte Licht blockiert.

4. Automatische Arzneimittelverpackungsmaschine gemäß Anspruch 1, wobei der Verschluss-Antriebsteil (7) umfasst:
einen Rotations-Stift (71), der an der oberen Seite des letzten Füllschachts (5) installiert ist, mit der oberen Seite des Verschlusses (6) gekoppelt ist, und eine Torsionsfeder (72) aufweist;
einen schräg am Ende des Rotations-Stifts (71) angeordneten Trigger (73);
ein Betätigungselement (74) zum Drücken des Endes des Triggers (73) zum Rotieren des Rotations-Stiftes (71); und
einen mit einer Klammer (76) an der rückseitigen Seite des Hauptrahmens (3) befestigten Motor (75) zum Antreiben des Betätigungselements (74).

5. Automatische Arzneimittelverpackungsmaschine gemäß Anspruch 4, wobei das Betätigungselement (74) umfasst:
eine Rotations-Scheibe (741), die an einer Achse des Motors (75) befestigt ist,
einen umlaufenden Stift (742), der exzentrisch auf der Rotationsscheibe (741) angeordnet ist und ein in dem Hauptrahmen (3) gebildetes Durchgangsloch (3a) durchdringt; und
eine Druck ausübende Rolle (743), die zum Kontaktieren des Triggers (73) an dem Ende des umlaufenden Stifts (742) angeordnet ist.

6. Automatische Arzneimittelverpackungsmaschine gemäß Anspruch 5, ferner umfassend:
einen an der Klammer (76) zur Befestigung des Motors (75) angeordneten Stopper-Stift (744) zum Kontaktieren des umlaufenden Stifts (742) zum Stoppen des Umlaufs des umlaufenden Stifts (742) zum Begrenzen des Umlaufs des umlaufenden Stifts (742).

7. Automatische Arzneimittelverpackungsmaschine gemäß einem der Ansprüche 5 oder 6, ferner umfassend:
einen am äußeren Umfang der Rotationsscheibe (741) angeordneten Magneten (745); und
einen Magnetsensor (746) zum Detektieren des Drehwinkels der Rotationsscheibe (741) unter Verwendung des Magnetfeldes des Magneten (745).

## Revendications

1. Machine d'emballage automatique de médicaments comprenant une partie terminale de trémie (5) prévue au niveau de la partie inférieure d'une trémie (4) installée dans un châssis principal (3), un obturateur (6) installé dans la partie terminale de trémie (5), et une partie d'entraînement d'obturateur (7) pour entraîner l'obturateur (6) afin d'ouvrir et de fermer la partie terminale de trémie (5) de sorte qu'un comprimé (T) passant par la trémie (4) depuis une cassette de comprimés (2a) et déchargé dans la partie terminale de trémie (5), est inséré dans des feuilles d'emballage (P) par la partie d'entraînement d'obturateur (7) et emballé de manière continue par un dispositif de scellement (8) sous le contrôle d'un contrôleur (2b),
la machine d'emballage automatique de médicaments comprenant en outre un appareil pour détecter un comprimé qui tombe (T),
**caractérisée par** l'appareil pour détecter un comprimé qui tombe (T) comprenant un détecteur de comprimé qui tombe (1) installé dans la partie terminale de trémie (5) pour détecter le moment où le comprimé (T) tombe dans la partie terminale de trémie (5) et pour introduire l'information détectée concernant le comprimé qui tombe (T) au contrôleur (2b), le contrôleur (2b) étant adapté pour contrôler le moment où l'obturateur (6) est ouvert en fonction de l'information détectée concernant le moment où le comprimé (T) tombe dans la partie terminale de trémie (5).

2. Machine d'emballage automatique de médicaments selon la revendication 1, dans laquelle le détecteur de comprimé qui tombe (1) comprend :
un trou de passage avant (11) et un trou de passage arrière (12), pénétrant respectivement dans le côté avant et le côté arrière de la partie terminale de trémie (5) ; et
un capteur optique (13) installé pour correspondre au trou de passage avant (11) et au trou de passage arrière (12) pour émettre de la lumière sur le comprimé (T) qui est tombé dans la partie terminale de trémie (5) afin de détecter le comprimé qui tombe.

3. Machine d'emballage automatique de médicaments selon la revendication 2, dans laquelle le capteur optique (13) comprend :
une pluralité d'émetteurs de lumière (131) agencée dans le trou de passage avant (11) dans la direction horizontale pour émettre de la lumière à l'intérieur de la partie terminale de trémie (5) ; et
le même nombre de récepteurs de lumière (132) que le nombre d'émetteurs de lumière (131) agencés pour correspondre aux émetteurs de lumière dans le trou de passage arrière (12) pour détecter le comprimé (T) qui tombe dans la partie terminale de trémie (5) lorsque le comprimé qui tombe bloque la lumière émise par les émetteurs de lumière (131).

4. Machine d'emballage automatique de médicaments selon la revendication 1, dans laquelle la partie d'entraînement d'obturateur (7) comprend :
une broche de rotation (71) installée de manière rotative sur le côté supérieur de la partie terminale de trémie (5), couplée avec le côté supérieur de l'obturateur (6) et ayant un ressort de torsion (72) ;
un déclencheur (73) installé de manière oblique sur l'extrémité de la broche de rotation (71) ;
un actionneur (74) pour comprimer l'extrémité du déclencheur (73) afin de faire tourner la broche de rotation (71) ; et
un moteur (75) monté sur le côté arrière du châssis principal (3) grâce à un support (76) pour entraîner l'actionneur (74).

5. Machine d'emballage automatique de médicaments selon la revendication 4, dans laquelle l'actionneur (74) comprend :
un disque de rotation (741) monté sur un axe du moteur (75) ;
un broche rotative (742) installée de manière excentrique sur le disque de rotation (741) et pénétrant dans un trou de passage (3a) formé dans le châssis principal (3) ; et
un rouleau de poussée (743) installé de manière rotative sur l'extrémité de la broche rotative (743) pour entrer en contact avec le déclencheur (73).

6. Machine d'emballage automatique de médicaments selon la revendication 5, comprenant en outre :
une broche de butée (744) installée dans le support (76) pour fixer le moteur (75) et entrer en contact avec la broche rotative (742) afin d'arrêter la révolution de la broche rotative (742) afin de limiter la révolution de la broche rotative (742).

7. Machine d'emballage automatique de médicaments selon l'une quelconque des revendications 5 ou 6, comprenant en outre :
un aimant (745) installé sur la circonférence externe du disque de rotation (741) ; et
un capteur magnétique (746) pour détecter l'angle de rotation du disque de rotation (741) en utilisant le champ magnétique de l'aimant (745).
